# EUROPEAN PATENT APPLICATION

(11) **EP 3 128 254 A1**
(43) Date of publication of application: **08.02.2017**
(21) Application number: 15769008.2
(22) Date of filing: 17.03.2015
(51) Int. Cl.: F24J 2/24, F24J 2/46

(54) **HEAT-MEDIUM DISCHARGE DEVICE**

(30) Priority: 28.03.2014 JP 2014067616
(71) Applicant: Chiyoda Corporation, Kanagawa 220-8765 (JP)
(72) Inventor: SUZUKI, Toshihisa, Yokohama-shi Kanagawa 220-8765 (JP); KAMBARA, Masashi, Yokohama-shi Kanagawa 220-8765 (JP)
(74) Representative: Prüfer & Partner mbB Patentanwälte · Rechtsanwälte
(86) International application number: PCT/JP2015/057820
(87) International publication number: WO 2015/146701

(57) **Abstract**

Provided is a heat-medium discharge device capable of preventing a heat medium from leaking from a vent portion due to the reverse flow of the heat medium in a part of heat medium channels in accordance with a pressure of the heat medium flowing downward when the vent portions of the heat medium channels of a plurality of solar heat collection devices are opened at the substantially same timing so that the heat medium flows downward based on a height difference.

A heat medium channel (2) of a solar heat collection device (1) is provided with a height difference causing a heat medium inside the heat medium channel (2) to flow downward to an angled pipe (5). A highest portion of the heat medium channel (2) is provided with a vent portion (15) capable of opening and closing to receive air when the heat medium is discharged. The vent portion (15) is provided with leakage prevention means which prevents the heat medium from leaking from the vent portion (15) when the heat medium of the heat medium channel flows reversely in a discharge direction. The leakage prevention means includes a vent valve and a check valve or includes a pressuremeter (32) measuring a pressure inside the heat medium channel (2) and a vent valve (15b) closing the vent portion (15) when a measurement value of the pressuremeter (32) becomes a positive pressure.

## Description

### Technical Field

The present invention relates to a heat-medium discharge device that discharges a heat medium from a heat medium channel of a solar heat collection device including the heat medium channel used to circulate the heat medium therein.

### Background Art

As an example of a system that realizes the efficient and stable electric power supply using renewable energy, a power generation plant using solar heat can be exemplified (for example, see Patent Literatures 1 and 2).

In the power generation plant using the solar heat, the solar heat is collected by a solar heat collection device, the collected heat is fed to a heat exchanger through a heat medium, water is changed into steam by the heat, and a turbine is driven by the steam to generate electric power.

The heat collected by the solar heat collection device can be stored in a heat storage device through the heat medium. Then, when the stored heat is fed again to the heat exchanger through the heat medium at a time zone such as a night in which solar rays cannot be collected, electric power can be generated. For this reason, electric power can be stably supplied.

As the heat medium used in the solar heat power generation plant, synthetic oil is generally used. However, in recent years, there has been an attempt to change the heat medium from the synthetic oil to a molten salt.

When the heat medium is changed from the synthetic oil to the molten salt, following advantages can be obtained.

First, since high-temperature steam can be supplied compared with the related art, power generation efficiency can be improved and power generation cost can be decreased. Further, in the system that uses the molten salt as the heat medium, the capacity of a heat storage tank used in the system can be decreased compared with the related art. Further, since the molten salt is used as a heat storage medium in the related art (the heat medium: synthetic oil), there is a need to exchange heat between the synthetic oil and the molten salt. However, since the entire system is moved only by the molten salt, the heat exchanger is not needed and thus the plant can have a simpler configuration.

### Citation List

### Patent Literature

Patent Literature 1: US 2010/43776 A
Patent Literature 1: JP 2014-31787 A

### Summary of Invention

### Technical Problem

Incidentally, the heat medium channel which circulates the heat medium to the solar heat collection device is configured to circulate the heat medium by a pump. However, there is a case where the heat medium inside the heat medium channel is discharged, for example, for maintenance. Further, the heat medium is circulated in the heat medium channel by the pump. However, when the supply of electric power is interrupted due to a power failure or an accident or the pump is broken, the circulation of the heat medium is stopped. Here, when a molten salt having a congealing point temperature higher than an atmospheric temperature is used as the heat medium, there is a possibility that the heat medium not flowing through the heat medium channel is cooled and solidified in relatively short time. In this case, the heat medium channel is blocked by the solidified heat medium when the operation is resumed. Thus, there is a need to heat the heat medium channel to melt the heat medium. As a result, some time and cost are taken when the operation is resumed.

Further, for example, when the circulation of the heat medium having a low boiling point is stopped at a day time in fine weather, the heat medium inside the solar heat collection device is heated while not flowing therein. As a result, there is concern that the temperature of the heat medium may exceed the boiling point.

Thus, when the pump for circulating the heat medium cannot be operated again after the pump is stopped due to some reasons, it is desirable to discharge the heat medium from the heat medium channel. Further, it is desirable to shorten the discharge time during the discharge operation.

Thus, when a plurality of solar heat collection devices are provided in a solar heat power generation plant, heat medium channels of the solar heat collection devices are connected to a pipe supplying a heat medium to the heat medium channel and a pipe collecting the heat medium from the heat medium channel, and the heat medium is discharged from the heat medium channel through the pipes, a problem arises as below. Additionally, there is a need to form a height difference causing the heat medium to flow downward in the heat medium channel or the pipe so that the heat medium can be discharged even when the pump for circulating the heat medium is stopped.

As described above, it is desirable to discharge the heat medium at the substantially same timing in the solar heat collection devices in order to discharge the heat medium in short time. In order to cause the heat medium to flow downward by a height difference, a valve serving as an openable/closeable vent portion is provided at the highest portion of the heat medium channel, the valve is opened when the heat medium is discharged in order to receive air, and thus the heat medium flows downward inside the heat medium channel in accordance with the inclination (a height difference) of the heat medium channel.

At this time, a pressure increases due to the inflow of the heat medium in the pipe into which the heat medium flows from the heat medium channel. Further, when a height difference is formed in the pipe, the heat medium discharged from the heat medium channel connected to the upside of the pipe flows to the downside of the height difference and the pressure of the heat medium is applied to a connection portion between the pipe and the heat medium channel connected to the downside of the pipe. As a result, there is concern that the heat medium inside the heat medium channel flows reversely in the discharge direction. That is, a pressure is applied to the heat medium inside the heat medium channel in a direction opposite to the heat medium discharge direction.

In this case, there is concern that the heat medium may leak from the opened vent portion.

The invention is made in view of the above-described circumstances and an object of the invention is to provide a heat-medium discharge device capable of preventing a heat medium from leaking from a vent portion due to the reverse flow of the heat medium in a part of heat medium channels in accordance with a pressure of the heat medium flowing downward to the same pipe when the vent portions of the heat medium channels of a plurality of solar heat collection devices are opened at the substantially same timing so that the heat medium flows downward based on a height difference.

### Solution to Problem

In order to solve the above-described problems, according to the invention, there is provided a heat-medium discharge device for discharging a heat medium from a heat medium channel through which the heat medium flows in a solar heat collection device heating the heat medium by solar heat, wherein the heat medium channel is connected to a target discharge portion serving as a heat medium discharge destination, the heat medium channel is provided with a height difference causing the heat medium inside the heat medium channel to flow downward to the target discharge portion, and a highest portion of the heat medium channel is provided with a vent portion opened and closed to receive air when the heat medium is discharged, and wherein leakage prevention means is provided to close the vent portion when the heat medium of the heat medium channel flows reversely in a heat medium discharge direction.

According to such a configuration, when the heat medium is discharged to, for example, a target discharge portion such as a container, a reservoir, and a pipe by the heat-medium discharge device of the solar heat collection system, a pressure inside the target discharge portion connected to the heat medium channel increases. Accordingly, when there is concern that the heat medium flows reversely so that the heat medium leaks from the opened vent portion, the vent portion is closed to prevent the leakage of the heat medium from the vent portion.

In the above-described configuration of the invention, the heat medium channels of a plurality of the solar heat collection devices may be connected to the target discharge portion and the leakage prevention means may be provided in at least one of the heat medium channels.

According to such a configuration, it is possible to prevent the heat medium from leaking from the vent portion by reverse flow prevention means provided in a part of the heat medium channels when the heat medium is discharged from the plurality of heat medium channels to the target discharge portion so that the pressure inside the target discharge portion increases and the heat medium is likely to flow reversely in a part of the heat medium channels. Additionally, the reverse flow prevention means maybe provided in all heat medium channels. However, for example, when the heat medium is discharged at the same time from the plurality of heat medium channels, the reverse flow prevention means may be provided only in the heat medium channel through which the heat medium flows reversely due to the connection position between the heat medium channel and the target discharge portion.

In the above-described configuration of the invention, a check valve which serves as the leakage prevention means and closes the vent portion when the heat medium of the heat medium channel flows reversely in the heat medium discharge direction may be provided in the vent portion.

According to such a configuration, it is possible to prevent the heat medium from leaking from the vent portion by a simple configuration. The check valve is provided in, for example, the vent portion of the heat medium channel and is disposed in series to the valve opening and closing the vent portion.

In the above-described configuration of the invention, pressure measurement means which measures a pressure inside the heat medium channel and a valve for closing the vent portion when a pressure measured by the pressure measurement means is a positive pressure may be provided as the leakage prevention means.

According to such a configuration, if the vent portion is closed when the pressure inside the heat medium channel becomes a positive pressure, the leakage of the heat medium from the vent portion can be prevented. Additionally, when the heat medium flows downward in accordance with the inclination of the heat medium channel so that the heat medium is discharged, the inside of the heat medium channel basically has a negative pressure and thus the heat medium does not leak from the vent portion. On the contrary, when a pressure is applied from the connection portion between the heat medium channel and the target discharge portion so that the heat medium channel has a positive pressure, there is concern that the heat medium may flow reversely in the heat medium channel so that the heat medium leaks from the vent portion. However, in this case, the valve of the vent portion is closed based on the condition in which the heat medium channel has the positive pressure. Accordingly, the leakage of the heat medium is prevented.

### Advantageous Effects of Invention

According to the invention, when a vent portion is opened to discharge a heat medium by gravity from a heat medium channel for circulating the heat medium in a solar heat collection device, it is possible to prevent the heat medium from leaking from the vent portion even when the heat medium flows reversely due to a pressure toward a heat medium discharge destination in the heat medium channel.

### Brief Description of Drawings

Fig. 1 is a schematic diagram illustrating a solar heat collection system including a heat-medium discharge device according to a first embodiment of the invention.
Fig. 2 is a schematic diagram illustrating a main part of the heat-medium discharge device.
Fig. 3 is a schematic diagram illustrating a main part of a heat-medium discharge device according to a second embodiment of the invention.

### Description of Embodiments

### (First Embodiment)

Hereinafter, a first embodiment of the invention will be described with reference to the drawings.

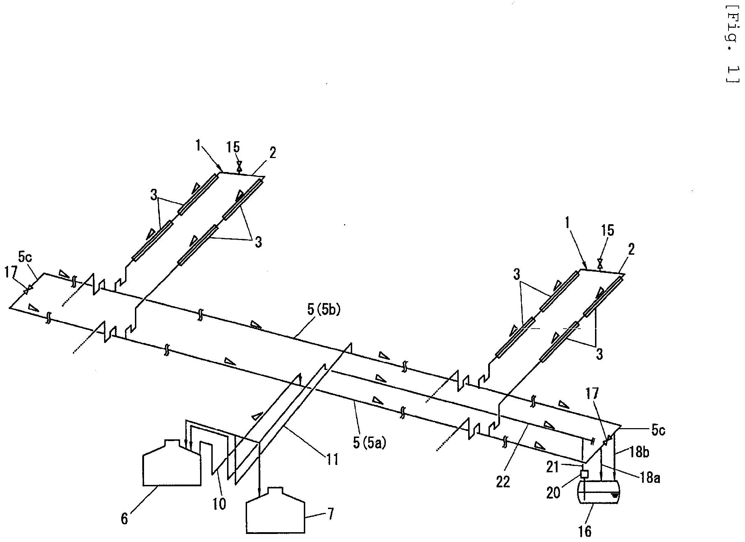

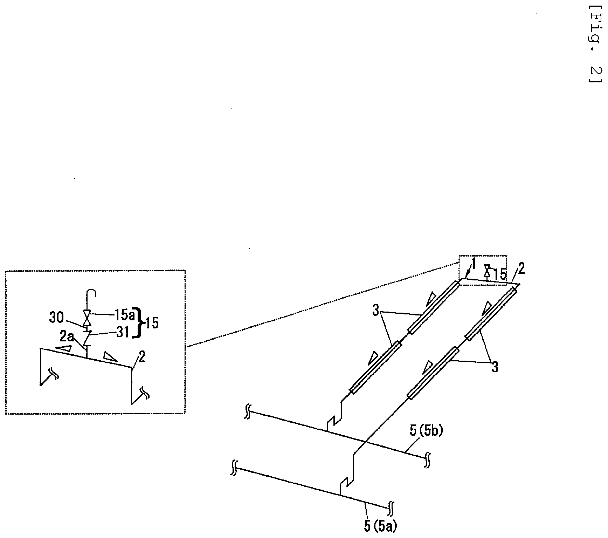

Fig. 1 illustrates a schematic configuration of a solar heat collection system including a heat-medium discharge device 30 (illustrated in Fig. 2) of the first embodiment. The solar heat collection system illustrated in Fig. 1 includes a plurality of solar heat collection devices 1. Additionally, two solar heat collection devices 1 are depicted in Fig. 1, but a plurality of (for example, one hundred or more) solar heat collection devices 1 are provided. Further, solar heat which is collected by the solar heat collection system is sent to a power generation system through a heat medium to generate electric power. A solar heat power generation plant includes the solar heat collection system and the power generation system.

The solar heat collection device 1 includes a substantially U-shaped heat medium channel 2 and the heat medium channel 2 is heated by solar rays collected by a light collection mirror 3 so that the temperature of a heat medium flowing through the heat medium channel 2 rises to, for example, about 550°C.

Additionally, in the embodiment, a molten salt which is formed by a mixture of sodium nitrate and potassium nitrate is used as the heat medium.

Further, in Fig. 1, a small right angled triangle indicates an inclination symbol and the heat medium channel 2 and an angled pipe 5 to be described later are inclined with respect to the horizontal plane in accordance with the inclination symbol.

The heat medium channel 2 of solar heat collection device 1 is connected to the angled pipe 5. The angled pipe 5 is formed in a loop shape and is formed so that a left end of the angled pipe is higher than a right end thereof in Fig. 1. That is, the angled pipe 5 is inclined rightward and downward with respect to the horizontal plane in Fig. 1. Further, the angled pipe 5 includes two angled pipes 5a and 5b which are disposed in parallel and one angled pipe 5a and the other angled pipe 5b are connected to a pipe 5c at each of both ends.

Two tanks 6 and 7 are connected to the angled pipe 5. The tanks 6 and 7 are respectively used to store the heat medium therein. Here, the tank 6 stores the heat medium which has not been heated by the solar heat collection device 1 and the tank 7 stores the heat medium heated by the solar heat collection device 1. Thus, in the description below, the tank 6 will be referred to as a cold side tank 6 and the tank 7 will be referred to as a hot side tank 7.

The cold side tank 6 is connected to the angled pipe 5a by a connection pipe 10 and the heat medium is fed from the cold side tank 6 to the angled pipe 5a by a pump (not illustrated) provided in the cold side tank 6. The heat medium which is fed to the angled pipe 5a is branched at the connection portion between the connection pipe 10 and the angled pipe 5a, a part of the heat medium flows rightward along the inclination of the angled pipe 5a, and the remaining heat medium flows leftward against the inclination of the angled pipe 5a.

Further, the hot side tank 7 is connected to the angled pipe 5b by a connection pipe 11 and the heat medium heated by the solar heat collection device 1 is fed to the hot side tank 7 by the pressure of the pump. Additionally, the heat medium can be branched from a halfway position of the connection pipe 11 and can be also fed to the cold side tank 6 if necessary. For example, since the heat medium cannot be heated by the solar heat collection device 1 during the night when there is no sunshine, the heat medium is fed only to the cold side tank 6 by a switching valve provided at the branch portion in that case. Accordingly, it is possible to prevent the non-heated heat medium from being fed to the hot side tank 7.

Further, one end of the heat medium channel 2 of the solar heat collection device 1 is connected to the angled pipe 5a and the other end thereof is connected to the angled pipe 5b. Thus, the heat medium which flows through the angled pipe 5a during a normal operation is the heat medium which has not been heated by the solar heat collection device 1 and the heat medium which flows through the angled pipe 5b is the heat medium which is heated by the solar heat collection device 1. In the heat medium channel 2 of the solar heat collection device 1, the heat medium flows from the end connected to the angled pipe 5a to the end connected to the angled pipe 5b so that the heat medium is circulated in the solar heat collection device 1.

Further, as illustrated in Fig. 2, a vent medium channel 2a provided with a vent portion 15 receiving air into the heat medium channel 2 during a heat medium discharge operation is connected to the highest position of (the highest position in the height direction) of the heat medium channel 2 of each solar heat collection device 1. The vent medium channel 2a is provided at the highest position of the heat medium channel 2 to be directed upward. Additionally, the vent medium channel 2a and the heat medium channel 2 are formed as tube bodies. Further, the vent medium channel 2a is connected to the heat medium channel 2 to have a shape in which the channels are branched in two shapes such as a T-shape or a Y-shape. Thus, a shape is formed in which the vent medium channel 2a is branched in two directions at the connection portion to the heat medium channel 2. Accordingly, when air flows from the vent medium channel 2a into the highest position of the loop-shaped heat medium channel 2, the air flows from the vent medium channel 2a into the heat medium channel 2 in two directions.

Further, in the embodiment, the vent medium channel 2a, that is, a portion connected to the vent medium channel 2a of the heat medium channel 2 having a shape branched in two directions from the vent medium channel 2a is upright in the substantially vertical direction with respect to the lower inclined heat medium channel 2. By the load of the heat medium at this portion, a structure is obtained which prevents the reverse flow of the heat medium by a slight pressure.

The vent medium channel 2a which is a part of the heat medium channel 2 is provided with the vent portion 15 which introduces the air into the heat medium channel 2 when the heat medium is discharged. In the embodiment, the vent portion 15 includes a check valve 31 and a vent valve 15a as a part of the heat-medium discharge device 30. If the vent valve 15a is opened when the heat medium is discharged from the heat medium channel 2, the air is introduced into the heat medium channel 2. Additionally, the vent valve 15a may be an electromagnetic valve or a valve which can be opened and closed manually. However, the electromagnetic valve which can be opened and closed is desirable in order to manually open the valve in the event of a power failure. Further, when the vent valve 15a is configured as the electromagnetic valve, a battery may be provided as a backup power supply so that the vent valve 15a can be operated by the electric power supplied from the battery even in the event of the power failure.

The check valve 31 serves as the leakage prevention means which prevents the heat medium from leaking from the vent portion 15 when a pressure is applied from the angled pipe 5 to the heat medium channel 2 during a heat medium discharge operation as below so that the heat medium flows reversely in the discharge direction. The check valve 31 is disposed below the vent valve 15a in the vent medium channel 2a to be located near the heat medium channel 2. Thus, when the heat medium does not pass by the check valve 31, the heat medium does not reach the vent valve 15a. Further, the check valve 31 allows the flow of the heat mediumor the air in a direction from the upside toward the downside or vice versa in Fig. 2. Additionally, in the embodiment, the heat-medium discharge device 30 includes at least the heat medium channel 2, the vent medium channel 2a, the vent portion 15 (the vent valve 15a, the check valve 31), and the angled pipe 5 (the angled pipe 5a, the angled pipe 5b) of the solar heat collection system. Additionally, the heat-medium discharge device may also include a drain container 16 or a pump 20 to be described later.

Further, a drain container 16 is disposed at a position lower than the connection position of the heat medium channel 2 of the solar heat collection device 1 disposed at the lowest position among the plurality of solar heat collection devices 1 and the drain container 16 is connected to the angled pipe 5. Specifically, the drain container 16 is connected to the pipe 5c at the right end of the angled pipe 5.

The valve 17 is provided at the center portion of the pipe 5c, the pipe 5c near the angled pipe 5a in relation to the valve 17 is connected to the drain container 16 by a pipe 18a, and the pipe 5c near the angled pipe 5b in relation to the valve 17 is connected to the drain container 16 by a pipe 18b. Additionally, the valve 17 is normally closed.

Further, a valve (not illustrated) is provided at the connection portion between the pipe 18b and the pipe 5c. Then, when the valve is opened, the heat medium which flows through the angled pipe 5b can be received in the drain container 16 through the pipe 5c and the pipe 18b.

Further, the heat medium which flows through the angled pipe 5a is normally fed to the drain container 16 by the pipes 5c and 18a.

Further, a pump 20 which feeds the heat medium from the drain container 16 to the cold side tank 6 is provided. A discharge pipe 21 is connected to the drain container 16 and the pump 20 is provided at a halfway position of the discharge pipe 21.

Meanwhile, a discharge pipe 22 is provided between the angled pipes 5a and 5b to be parallel to the angled pipes 5a and 5b and one end of the discharge pipe 22 is bent toward the cold side tank 6 and is connected to the cold side tank 6. Further, the other end of the discharge pipe 22 is connected to the discharge pipe 21.

Thus, the heat medium which is received in the drain container 16 is fed to the cold side tank 6 through the discharge pipes 21 and 22 by the pump 20 and is stored in the cold side tank 6.

In the solar heat collection system including the heat-medium discharge device 30 with such a configuration, the heat medium is fed from the cold side tank 6 to the angled pipe 5a by a pump not illustrated in the drawings during the normal operation. Then, the heat medium is fed from the angled pipe 5a to the heat medium channel 2 of each solar heat collection device 1 and the heat medium which is heated by the solar ray passes through the connection pipe 11 from the angled pipe 5b so that the heat medium is stored in the hot side tank 7. The heat medium which is stored in the hot side tank 7 by a pipe (not illustrated) is fed to the power generation system and generates electric power by a turbine. The heat medium which is used to generate electric power and decreases in temperature is returned to the cold side tank 6 by a pipe (not illustrated) . Then, the heat medium is fed again from the cold side tank 6 to the angled pipe 5b by a pump (not illustrated) and the heat medium is heated by the solar heat collection device 1 as described above. Next, the heated heat medium is stored in the hot side tank 7.

With such steps, it is possible to stably supply the heat medium to the power generation system. That is, the heat medium which is stored in the hot side tank 7 is fed to the heat exchanger of the power generation system so that water is changed into steam by heating and electric power is generated while the turbine of the power generation system is rotated. The heat medium which has been used to generate electric power in the power generation system and decreases in temperature is returned to the cold side tank 6.

Further, a part of the heat medium which flows through the angled pipe 5a is fed to the drain container 16 through the pipes 5c and 18a, is fed from the drain container 16 to the cold side tank 6 through the discharge pipes 21 and 22 by the pump 20, and is stored in the cold side tank 6.

Meanwhile, for example, when there is concern that the heat medium flowing through the heat medium channel 2 may be solidified due to a decrease in temperature thereof in a maintenance or power failure state, the heat medium is discharged from the heat medium channel 2 in this way.

First, the vent valve 15a of the vent portion 15 which is provided at the highest position of the heat medium channel 2 of each solar heat collection device 1 is opened to introduce air into the heat medium channel 2 and the valve provided at the connection portion between the pipe 18b and the pipe 5c is opened.

Then, the heat medium flows from the heat medium channel 2 of each solar heat collection device 1 into the angled pipe 5 (5a and 5b) by gravity and the heat medium flows through the angled pipe 5 (5a and 5b) by gravity to be received in the drain container 16 through the pipes 18a and 18b.

The heat medium which is received in the drain container 16 is fed to the cold side tank 6 through the discharge pipes 21 and 22 by the pump 20 and is stored in the cold side tank 6.

Thus, as for the heat medium discharged from the plurality of solar heat collection devices 1, the heat medium can be discharged from the solar heat collection device 1 by gravity while the cold side tank 6 is not installed at a position lower than the solar heat collection device 1.

Here, when the vent valves 15a of the heat medium channels 2 of the solar heat collection devices 1 are opened at the substantially same time, the heat medium flows from the heat medium channels 2 of each solar heat collection devices 1 to the angled pipes 5 at the substantially same time. In this case, since the heat medium channels 2 of the solar heat collection devices 1 are connected to the same angled pipe 5, a pressure is applied to the heat medium channel 2 connected to the downward inclined side of the angled pipe 5 in relation to the heat medium channel 2 into which the heat medium flows from the plurality of heat medium channels 2 and which is connected to the upward inclined side of the angledpipe 5. Accordingly, there is concern that the heat medium flows reversely in the heat medium discharge direction (the downward inclined direction) of the heat medium channel 2.

In this case, although there is concern that the heat medium may leak from the vent valve 15a in the heat medium channel 2 in which the heat medium flows reversely from the angled pipe 5, the heat medium cannot leak from the vent portion 15 beyond the check valve 31 since the check valve 31 serving as the leakage prevention means is provided in the vent portion 15. Further, the pressure applied to the heat medium channel 2 connected to the downward inclined side of the angled pipe 5 decreases as the heat medium of the heat medium channel 2 connected to the upward inclined side of the angled pipe 5 is discharged and thus the heat medium can flow downward. In the heat medium channel 2 in such a state, the pressure decreases since the vent valve 15a is opened already and thus the heat medium starts to be discharged. That is, if the vent valve 15a is opened, the heat medium starts to automatically flow from the heat medium channel 2 when the pressure of the heat medium channel 2 becomes equal to or lower than the atmospheric pressure.

Accordingly, it is possible to discharge the heat medium as prompt as possible while preventing the heat medium from leaking from the vent portion 15.

Further, the heat medium flowing through the angled pipe 5 and the heat medium channel 2 is kept at a temperature in which the heating medium is not solidified and the inside of the drain container 16 is kept at a temperature in which the heat medium received in the drain container 16 is not solidified. That is, the flow rate of the heat medium is determined so that the heat medium is not solidified in consideration of the heat radiation amount from the angled pipe 5 and the heat medium channel 2 and the cold side tank 6, the hot side tank 7, and the drain container 16 are kept warm.

Thus, it is possible to receive the heat medium from the heat medium channel 2 of the solar heat collection device 1 into the drain container 16 by gravity without solidifying the heat medium and to feed the heat medium from the drain container 16 to the cold side tank 6 so that the heat medium is stored in the cold side tank 6 while not being solidified therein.

### (Second Embodiment)

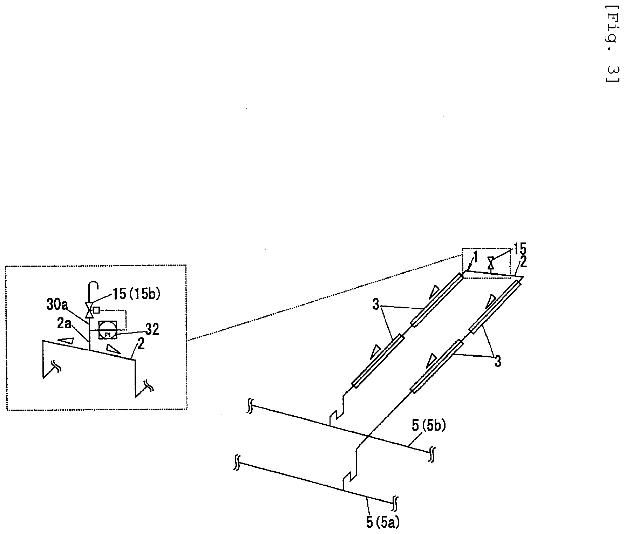

Fig. 3 illustrates a schematic configuration of a main part of a solar heat collection system including a heat-medium discharge device 30a of a second embodiment. Since the heat-medium discharge device 30a illustrated in this drawing is different from the heat-medium discharge device 30 of the first embodiment in that the vent portion 15 has a different structure, only this point will be described below. Here, the same reference numeral will be given to the same configuration as that of the first embodiment and the description thereof will be omitted or simplified.

The vent portion 15 of the second embodiment is provided in the vent medium channel 2a having the same structure as that of the first embodiment. The vent medium channel 2a is provided with a vent valve 15b which serves as an electromagnetic valve (an electronic control valve) and a pressuremeter 32 (pressure measurement means) is provided in the heat medium channel 2 below the vent valve 15b. The pressuremeter 32 is used to measure the pressure inside the vent medium channel 2a communicating with the heat medium channel 2.

The vent valve 15b is controlled to be opened and closed based on the pressure value output from the pressuremeter 32.

For example, when the value of the pressuremeter 32 is higher than the atmospheric pressure, the vent valve 15b is closed. Meanwhile, when the pressure value is equal to or lower than the atmospheric pressure, the vent valve 15b is opened. As described above, when the heat medium flows reversely from the angled pipe 5 toward the heat medium channel 2, the pressure inside the heat medium channel 2 becomes higher than the atmospheric pressure by the pressure from the angled pipe 5. In this case, the vent valve 15b is closed so that the leakage of the heat medium from the vent portion 15 is prohibited. Thus, the leakage prevention means which prevents the leakage of the heat medium at the vent portion 15 is obtained by the pressuremeter 32 and the vent valve 15b controlled by the pressure measurement value of the pressuremeter 32.

As for a method of controlling the vent valve 15b, for example, the vent valve is normally closed during the normal operation of the solar heat collection system and is controlled to be opened and closed by the signal of the measurement value output from the pressuremeter 32 only when the heat medium is discharged. That is, the vent valve 15b serving as the electronic control valve is turned on when the heat medium is discharged and the vent valve 15b is controlled by the pressure value measured by the pressuremeter 32.

Additionally, the vent valve 15b, the pressuremeter 32, and a control device (not illustrated) are also operated by a battery serving as a backup power supply even in the event of a power failure. Additionally, the control device is included in, for example, at least any one of the vent valve 15b and the pressuremeter 32.

When the control device of the vent valve 15b is turned on while the vent valve 15b is closed, the vent valve 15b is opened if the measurement value of the pressuremeter 32 is a negative pressure lower than the atmospheric pressure. Meanwhile, the vent valve 15b is kept in a closed state if the measurement value is the atmospheric pressure or a positive pressure equal to or higher than the atmospheric pressure. In this case, the vent valve is kept in a closed state until the measurement value of the pressuremeter 32 becomes lower than the atmospheric pressure and is opened when the measurement value becomes lower than the atmospheric pressure. Additionally, as for the atmospheric pressure, an actual atmospheric pressure may be used as the atmospheric pressure, but a predetermined pressure value which is substantially similar to the atmospheric pressure may be used for a control. Additionally, in order to reliably prevent the leakage of the heat medium from the vent valve 15b, a value which is slightly lower than the actual atmospheric pressure is used as the predetermined pressure value. Further, it is desirable to open the vent valve 15b only when the measurement value of the pressuremeter 32 becomes lower than the predetermined pressure value.

Here, the pressure of the connection portion of the heat medium channel 2 with respect to the angled pipe 5 becomes substantially equal to the pressure of the pressuremeter 32 of the vent medium channel 2a while the vent valve 15b is closed. Accordingly, it is possible to easily determine whether the heat medium flows reversely.

Further, when the vent valve 15b is opened, the pressure is also released. Thus, when the heat medium flows reversely after the vent valve 15b is opened once, the opening/closing state of the vent valve 15b is controlled based on a change in pressure smaller than that of the closed state. Additionally, the installation position of the pressuremeter 32 is not limited to the vent medium channel 2a, and may be provided at, for example, the connection end of the heat medium channel 2 with respect to the angled pipe 5. In this case, a change in pressure obtained when the heat medium flows reversely is large even in a state where the vent valve 15b is opened and hence a control can be easily performed. Additionally, the installation position of the pressuremeter 32 is not limited to the end of the heat medium channel 2 or the vent medium channel 2a and may be provided in any position of the heat medium channel 2.

Even in the heat-medium discharge device 30a of the second embodiment, it is possible to prevent the heat medium from leaking from the vent portion 15 when the heat medium is discharged. Further, when the heat medium does not flow reversely, that is, the pressure of the heat medium channel 2 becomes equal to or lower than the atmospheric pressure, the vent valve 15b is automatically opened so that the heat medium starts to be discharged from the heat medium channel 2. Thus, it is possible to promptly discharge the heat medium.

Additionally, in the above-described embodiments, an example has been described in which the molten salt formed by the mixture of sodium nitrate and potassium nitrate is used as the heat medium, but the heat medium may be other molten salts or other liquid metals or solutions. Furthermore, the heat medium may be also oil.

### Reference Signs List

1: solar heat collection device
2: heat medium channel
2a: vent medium channel
5: angled pipe (heat medium circulation pipe)
15: vent portion
15a: vent valve
15b: vent valve (leakage prevention means)
30: heat-medium discharge device
30a: heat-medium discharge device
31: check valve (leakage prevention means)
32: pressuremeter (leakage prevention means: pressure measurement means)

## Claims

1. A heat-medium discharge device for discharging a heat medium from a heat medium channel through which the heat medium flows in a solar heat collection device heating the heat medium by solar heat,
wherein the heat medium channel is connected to a target discharge portion serving as a heat medium discharge destination, the heat medium channel is provided with a height difference causing the heat medium inside the heat medium channel to flow downward to the target discharge portion, and a highest portion of the heat medium channel is provided with a vent portion capable of opening and closing to receive air when the heat medium is discharged, and
leakage prevention means is provided to close the vent portion when the heat medium of the heat medium channel flows reversely in a heat medium discharge direction.

2. The heat-medium discharge device according to claim 1,
wherein the heat medium channels of a plurality of the solar heat collection devices are each connected to the target discharge portion and the leakage prevention means is provided in at least one of the heat medium channels.

3. The heat-medium discharge device according to claim 1 or 2,
wherein a check valve which serves as the leakage prevention means and closes the vent portion when the heat medium of the heat medium channel flows reversely in the heat medium discharge direction is provided in the vent portion.

4. The heat-medium discharge device according to claim 1 or 2,
wherein pressure measurement means which measures a pressure inside the heat medium channel and a valve for closing the vent portion when a pressure measured by the pressure measurement means is a positive pressure are provided as the leakage prevention means.
